# EUROPEAN PATENT SPECIFICATION

(11) **EP 2 457 746 B1**
(45) Date of publication and mention of the grant of the patent: **04.09.2013**
(21) Application number: 11009235.0
(22) Date of filing: 22.11.2011
(51) Int. Cl.: B60C 11/11, B60C 11/03

(54) **Racing kart tire**
Rennkart-Reifen
Pneu pour kart de compétition

(30) Priority: 29.11.2010 JP 2010265568
(43) Date of publication of application: 30.05.2012
(73) Proprietor: Sumitomo Rubber Industries, Ltd., Hyogo-ken (JP)
(72) Inventor: Fujita, Masayuki, Kobe-shi Hyogo 651-0072 (JP)
(74) Representative: Manitz, Finsterwald & Partner GbR

(56) References cited:
- EP-A1- 0 502 694

## Description

### Background of the invention

The present invention relates to a pneumatic tire, more particularly to a tread pattern for a racing kart tire capable of improving the traction performance, braking performance and cornering performance under wet road conditions.

In general, a racing kart is not provided with a suspension mechanism which keeps the tires in contact with the road surface. As a result, the angle of the tire with respect to the road surface (hereinafter the "ground contacting camber angle") is altered during running, and the angle increases during cornering.

Meanwhile, in wet weather, a rain tire provided with tread grooves defining tread blocks is usually employed. Such rain tire has naturally a less ground contact area when compared with a slick tire used in dry weather. Further, during cornering, the ground contact area is further decreased due to the increased ground contacting camber angle as explained above. Therefore, the traction performance, braking performance and cornering performance are inferior.

### Summary of the Invention

It is therefore, an object of the present invention to provide a racing kart tire as a rain tire, in which, without sacrificing wet performance, the traction performance, braking performance and cornering performance can be achieved at high levels.

According to the present invention, a racing kart tire has a diameter of not more than 300 mm and comprises
a tread portion having a tread width and provided with a plurality of blocks divided by a plurality of grooves having widths of 3 to 20 mm,
the grooves including a center longitudinal groove circumferentially continuously extending on the tire equator, and
the blocks on each side of the center longitudinal groove including a row of axially inner center blocks, a row of axially outermost shoulder blocks and a row of middle blocks therebetween, wherein
each of the surface areas of the ground contact faces of the middle blocks is less than the surface areas of the ground contact faces of the center blocks and less than the surface areas of the ground contact faces of the shoulder blocks.

In the racing kart tire according to the present invention, therefore, since the grooves such as longitudinal grooves and transverse grooves which divide the blocks have widths of 3 to 20 mm, sufficient drainage is secured, and contact between the adjacent blocks can be prevented even if the blocks are deformed, and further, the edges of the blocks are effectively utilized to improve the traction performance, braking performance and cornering performance under wet road conditions.

Further, as the blocks include the center blocks, middle blocks and shoulder blocks and the middle blocks are formed as being smallest, the tread portion can be easily bent in the vicinity of the middle blocks, and thereby the ground contact during cornering is increased. Thus, even if the ground contacting camber angle is altered, the middle blocks contact with the ground steadily in both of the straight running during which the center blocks mainly contact with the ground and the cornering during which the shoulder blocks mainly contact with the ground. Therefore, the ground contact of the tread portion is increased, and it is possible to improve the traction performance, braking performance and cornering performance at high levels.

In this application including specification and claims, various dimensions, positions and the like of the tire refer to those under a normally inflated unloaded condition of the tire inflated to 100 kPa unless otherwise noted.

### Brief Description of the Drawings

Fig.1 and Fig.2 are developed views each showing a part of the tread portion of a racing kart tire according to an embodiment of the present invention.
Fig.3 is a developed view showing a part of tread portion of a racing kart tire as a comparative example.

### Description of the Preferred Embodiments

Embodiments of the present invention will now be described in detail in conjunction with the accompanying drawings.

According to the present invention, a racing kart tire 1 has an outside diameter of not more than 300 mm, and comprises a tread portion 2, a pair of sidewall portions, and a pair of bead portions, a carcass extending between the bead portions, and a tread reinforcing belt, as usual.

The tire 1 is designed as a rain tire and the tread portion 2 is provided with tread grooves such as longitudinal groove 3 and transverse groove 4 to define a plurality of blocks 5 which, in this embodiment, form a unidirectional tread pattern.

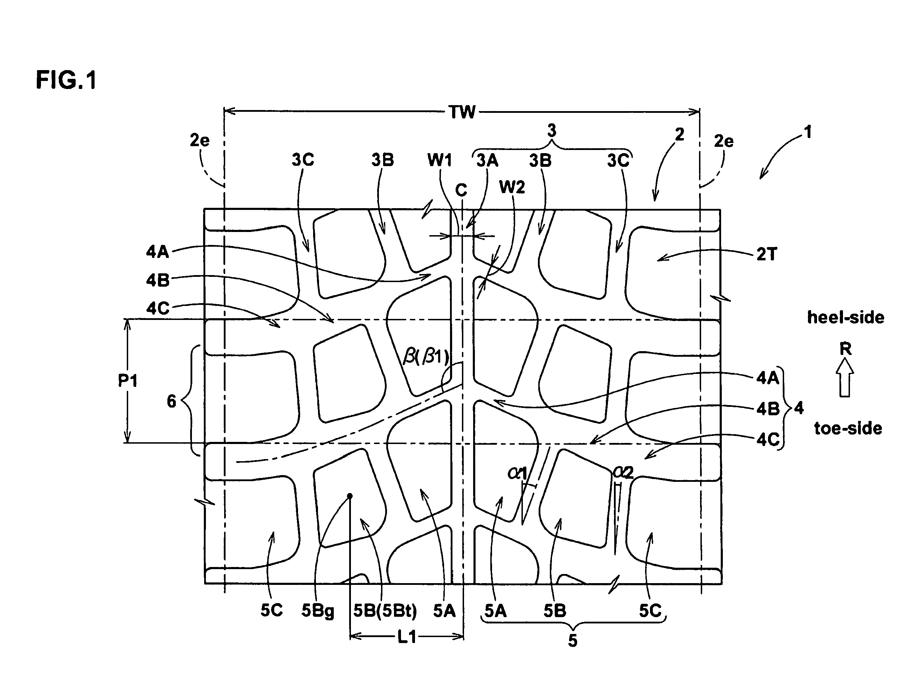

Incidentally, the intended/designed rotational direction R of the unidirectional tread pattern is indicated in the sidewall portions by the use of characters and/or symbol. As shown in Fig.1, the tread pattern is a block pattern, and formed by circumferentially repeating a design unit 6. Here, the design unit 6 means a minimum repeating unit including the tread grooves partially and extending across the entire tread width.

When circumferentially repeating the design unit 6, so called a variable pitching method can be employed, in which method the design units 6 are circumferentially arranged with several different circumferential pitch lengths P1. of course, it is also possible to circumferentially arrange the design units 6 with a constant pitch length P1.

As shown in Fig.1, the tread pattern includes longitudinal grooves 3 and transverse grooves 4 as the tread grooves to divide the blocks 5.

The longitudinal grooves 3 in this embodiment are a center longitudinal groove 3A disposed on the tire equator C and extending continuously in the tire circumferential direction, a middle longitudinal groove 3B disposed on each side of the center longitudinal groove 3A, and
a shoulder longitudinal groove 3C disposed axially outside each of the middle longitudinal grooves 3B.

To enable effective drainage and wet grip, the depths of such longitudinal grooves 3 are preferably set in a range of from about 3.0 to 7.0 mm.

To enhance the drainage during straight running, the center longitudinal groove 3A is formed as a straight groove. However, the middle longitudinal grooves 3B and shoulder longitudinal grooves 3c are formed as zigzag grooves each made up of alternate first zigzag groove segments and second zigzag groove segments.

When viewed toward the toe-side from the heel-side in the tire rotational direction R, the first zigzag groove segments of the middle longitudinal groove 3B are inclined from the axial outside to the axially inside at an angle α1 with respect to the tire circumferential direction, and the first zigzag groove segments of the shoulder longitudinal groove 3C are inclined from the axial outside to the axially inside at an angle α2 with respect to the tire circumferential direction, and the angle α1 is set to be more than the angle α2.

The transverse grooves 4 in this embodiment are:
central transverse grooves 4A extending between the center longitudinal groove 3A and the middle longitudinal grooves 3B;
middle transverse grooves 4B extending between the middle longitudinal grooves 3B and the shoulder longitudinal grooves 3C; and
shoulder transverse grooves 4C extending between the shoulder longitudinal grooves 3C and the tread edges 2e.

when viewed toward each tread edge 2e from the tire equator, the transverse grooves 4 are inclined toward the toe-side from the heel-side in the tire rotational direction R, and the inclination with respect to the tire axial direction is gradually decreased from the central transverse groove to the shoulder transverse groove.

The central, middle and shoulder transverse grooves 4A, 4B and 4C are aligned with the second zigzag groove segments of the middle and shoulder longitudinal groove 3B and 3C. As a result, there are formed a plurality of smoothly curved grooves which extend continuously from the center longitudinal groove 3A to the tread edges 2e to discharge water from the tread center region to the tread edges 2e during running.

To enhance the discharge toward the tread edge 2e, the obtuse angle β1 of the central transverse grooves 4A with respect to the tire circumferential direction is preferably set in a range of not more than 120 degrees, more preferably not more than 115 degrees, but not less than 105 degrees. The depths of the transverse grooves 4 are preferably set in a range of about 3.0 to 7.0 mm.

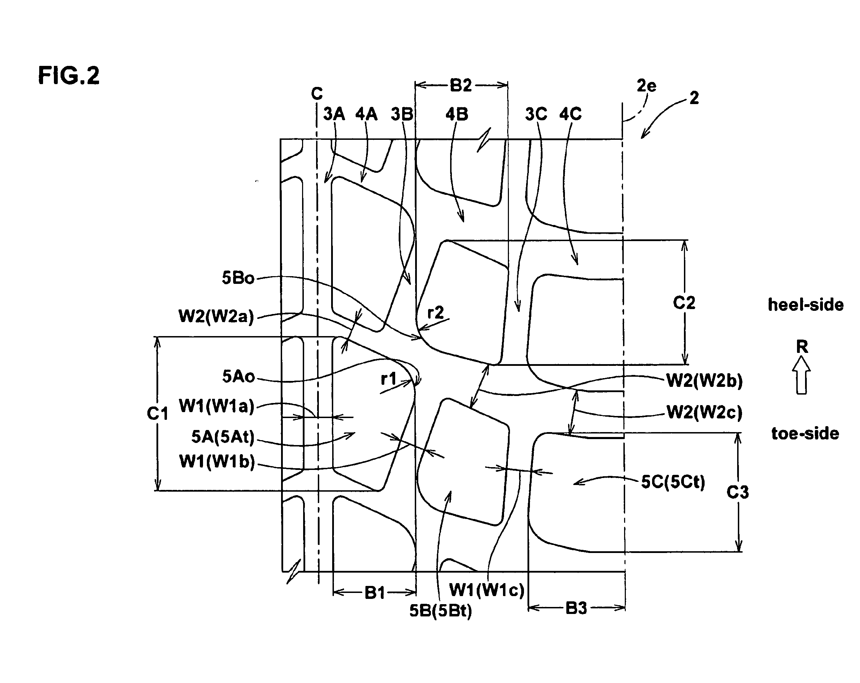

Further, it is preferable that, as shown in Fig.2, the widths w2 of the transverse grooves 4 are gradually increased toward the tread edge 2e from the tire equator C, and
the maximum width w2c of the shoulder transverse groove 4c is more than the maximum width w2b of the middle transverse groove 4B which is more than the maximum width w2a of the central transverse groove 4A. (W2a < w2b < w2c)

Desirably, the maximum groove width w2a is not less than 30 %, preferably not less than 35 %, but not more than 70 %, preferably not more than 50 % of the maximum groove width w2c. If the maximum groove width w2a is less than 30 %, it becomes difficult to provide sufficient drainage in the tread center region. If the maximum groove width w2a is more than 70 %, it becomes difficult to provide sufficient rigidity for the blocks 5A in the tread center region.

As shown in Fig.1, the blocks 5 are:
center blocks 5A disposed on each side of the center longitudinal groove 3A;
shoulder blocks 5C disposed along the tread edges 2e; and
middle blocks 5B disposed between the center blocks 5A and the shoulder blocks 5c.

The center blocks 5A are defined by the center longitudinal groove 3A, middle longitudinal grooves 3B and central transverse grooves 4A. In broad terms, the center block 5A has a trapezoidal configuration and the axial width gradually increases from the toe-side to the heel-side in the tire rotational direction R so as to increase the rigidity on its heel-side and thereby to increase the traction and to prevent uneven wear which is liable to occur on the heel-side. As shown in Fig.2, it is preferable that the center block 5A has a maximum axial width B1 of about 10 to 25 % of the tread width TW, and a maximum circumferential length C1 of about 15 to 30 % of the tread width TW.

In the center block 5A, its four corners are rounded, and the axially outside corner 5Ao on the heel-side is rounded by an arc having a radius of curvature r1 larger than those of the other three corners in order to prevent uneven wear starting from the corners. For this purpose, the radius of curvature r1 is preferably about 2 to 15 mm.

The middle blocks 5B are defined by the middle longitudinal grooves 3B, shoulder longitudinal grooves 3C, and middle transverse grooves 4B. In broad terms, due to the angle difference (α1 > α2), the middle block 5B has a trapezoidal configuration and its axial width gradually increases from the heel-side to the toe-side in the tire rotational direction R so as to increase the rigidity on its toe-side and thereby to increase the braking force and to prevent uneven wear which is liable to occur on the toe-side due to slip during braking.

It is preferable that, as shown in Fig.2, the middle block 5B has a maximum axial width B2 of about 10 to 20 % of the tread width TW, and a maximum circumferential length C2 of about 10 to 30 % of the tread width TW.

In the middle block 5B, its four corners are rounded, and the axially inside corner 5Bo on the toe-side is rounded by an arc having a radius of curvature r2 larger than those of the other three corners to prevent uneven wear starting from the corners. For this purpose, the radius of curvature r2 is preferably about 2 to 15 mm.

The shoulder blocks 5C are defined by the shoulder longitudinal grooves 3C, tread edges 2e and the shoulder transverse grooves 4C. In the shoulder block 5C, due to the inclination angle α2, the axial width gradually increases from the heel-side toward the toe-side in the tire rotational direction R. The shoulder block 5C has a generally rectangular configuration in which the maximum circumferential length C3 is more than the maximum axial width B3 in order to increase the axial component of the block edges in comparison with other blocks and thereby to improve the traction and braking performance, and the cornering performance in a well balanced manner.

It is preferable that the shoulder block 5C has, as shown in Fig.2, a maximum axial width B3 of about 10 to 27 % of the tread width TW, and a maximum circumferential length C3 of about 11 to 33 % of the tread width TW.

Further, the surface area of the ground contact face 5Bt of each middle block 5B is set to be less than the surface area of the ground contact face 5At of each center block 5A and also less than the surface area of the ground contact face 5Ct of each shoulder block 5C.

Therefore, the rigidity of the middle blocks 5B becomes relatively low, and it becomes easier for the tread portion 2 to be bent in the vicinity of the middle blocks 5B. As a result, in both of the straight running during which the center blocks 5A mainly contact with the ground and the cornering during which the shoulder blocks 5C mainly contact with the ground, the middle blocks 5B become contact with the ground. Accordingly, the ground contact of the tire 1 is greatly improved, and the traction performance, braking performance and cornering performance under wet road conditions can be achieved in a well balanced manner.

In this embodiment, such improved ground contact can be obtained without employing sipes, therefore, none of the blocks 5 is provided with a sipe. Accordingly, the tire does not suffer from wear due to the sipes.

In order to provide necessary drainage as well as to prevent the adjacent blocks 5 from contacting with each other even when the tread portion is deformed or bent as explained, the widths W1 of the longitudinal grooves 3 and the widths w2 of the transverse grooves 4 are set to be not less than 3 mm, preferably not less than 4 mm.

If less than 3 mm, it is difficult to improve the traction performance, braking performance and cornering performance. However, if the widths W1 and W2 are more than 20 mm, as the ground contacting are of the blocks 5 decrease, and it becomes difficult to improve the traction performance, braking performance and cornering performance. Therefore, the widths W1 of the longitudinal grooves 3 and the widths W2 of the transverse grooves 4 are set to be not more than 20 mm, preferably not more than 10 mm, more preferably not more than 8 mm.

Further, it is preferable that, among the longitudinal grooves 3, the width W1a of the center longitudinal groove 3A is largest. As a result, it become easier for the tread portion 2 to be bent in the vicinity of the tire equator C, and thereby the ground contact can be further improved. If the width W1a is excessively large, the center blocks 5A becomes smaller and difficult to provide large traction and braking force. Therefore, it is preferable that the difference (W1a-W1m) of the width W1a from the maximum width W1m between the middle and shoulder longitudinal grooves 3B and 3C is set in a range of not less than 1.0 mm, more preferably not less than 2.0 mm, but not more than 10 mm, more preferably not more than 5 mm.

Preferably, the total surface area GT2 of the ground contact faces 5Bt of all of the middle blocks 5B is set in a range of not less than 22 %, more preferably not less than 27 %, but not more than 32 %, more preferably not more than 31 % of the gross surface area GT (= GT1+GT2+GT3) of the ground contact faces of all of the blocks 5.

If the surface area GT2 is less than 22 %, then in both of the straight running and cornering, the traction performance, braking performance, and cornering performance under wet road conditions can not be fully improved. If the surface area GT2 is more than 32 %, the rigidity of the middle blocks 5B increases, and it becomes difficult to render the tread portion 2 easy to be bent in the vicinity of the middle blocks 5B.

Preferably, the total surface area GT1 of the ground contact faces 5At of all of the center blocks 5A is set in a range of not less than 25 %, more preferably not less than 30 %, but not more than 45 %, more preferably not more than 40 % of the gross surface area GT (= GT1+GT2+GT3) of the ground contact face of the all of the blocks 5.

If the surface area GT1 is less than 25 %, it is difficult to provide necessary rigidity for the center blocks 5A. If the surface area GT1 is more than 45 %, the longitudinal grooves 3 and/or transverse grooves 4 are decreased in the groove volume, and the drainage performance is deteriorated.

For the similar reasons, the total surface area GT3 of the ground contact faces 5Ct of the shoulder blocks 5C is preferably set in a range of not less than 30 %, more preferably not less than 35 %, but not more than 50 %, more preferably not more than 45 % of the gross surface area GT (= GT1+GT2+GT3) of the ground contact faces of the all of the blocks 5.

In order that the middle blocks 5B can contact with the ground steadily during straight running and during cornering even if the ground contacting camber angle is altered, the axial distance L1 of the centroid 5Bg of the ground contact face 5Bt of each middle block 5B from the tire equator c is set in a range of not less than 13 %, preferably not less than 17 %, but not more than 30 %, preferably not more than 25 % of the tread width TW.

Further, the maximum circumferential length C2 of the middle block 5B is preferably less than the maximum circumferential length C1 of the center block 5A. More specifically, the maximum circumferential length C2 is in a range of not less than 50 %, more preferably not less than 60 %, but not more than 99 %, more preferably not more than 90 % of the maximum circumferential length C1. Thereby, the tread portion 2 becomes more easy to be bent in the vicinity of the middle blocks 5B and the ground contact can be further improved. If the maximum circumferential length C2 becomes less than 50 %, the effect of the circumferential component of the edges of the middle blocks 5B becomes insufficient, and the cornering performance is liable to deteriorate. If the maximum circumferential length C2 becomes more than 99 %, the rigidity of the middle blocks 5B is increased, and it becomes difficult to obtain the above-mentioned effect.

The number of the pattern pitches which corresponds to the number of repetitions of the design unit 6 is set in a range of not less than 15, more preferably not less than 20, but not more than 30, more preferably not more than 25. If the number is less than 15, the maximum circumferential lengths C1, C2 and C3 of the blocks 5A, 5B and 5C, respectively, are increased, and the ground contact and uneven wear resistance are liable to become worse. If the number is more than 30, the ground contact faces 5At, 5Bt and 5Ct of the blocks 5A, 5B and 5C, respectively, become decreased, and the blocks rigidity is accordingly decreased, and as a result, there is a possibility that the traction performance, braking performance and cornering performance under wet road conditions and uneven wear resistance are deteriorated.

The above-mentioned angle α1 of the middle longitudinal groove 3B is preferably set in a range of not less than 5 degrees, more preferably not less than 10 degrees, but not more than 50 degrees, more preferably not more than 30 degrees with respect to the tire circumferential direction.

If the angle α1 is less than 5 degrees, the rigidity on the heel-side of the center blocks 5A and the rigidity on the toe-side of the middle blocks 5B can not be fully increased, and there is a possibility that the traction performance, braking performance and uneven wear resistance under wet road conditions are deteriorated. If the angle α1 is more than 50 degrees, as the center blocks 5A become narrow in the axial width on their toe-side and the middle blocks 5B become narrow in the axial width on their the heel-side, it becomes difficult fully improve the traction performance, cornering performance and braking performance.

### Comparison Tests

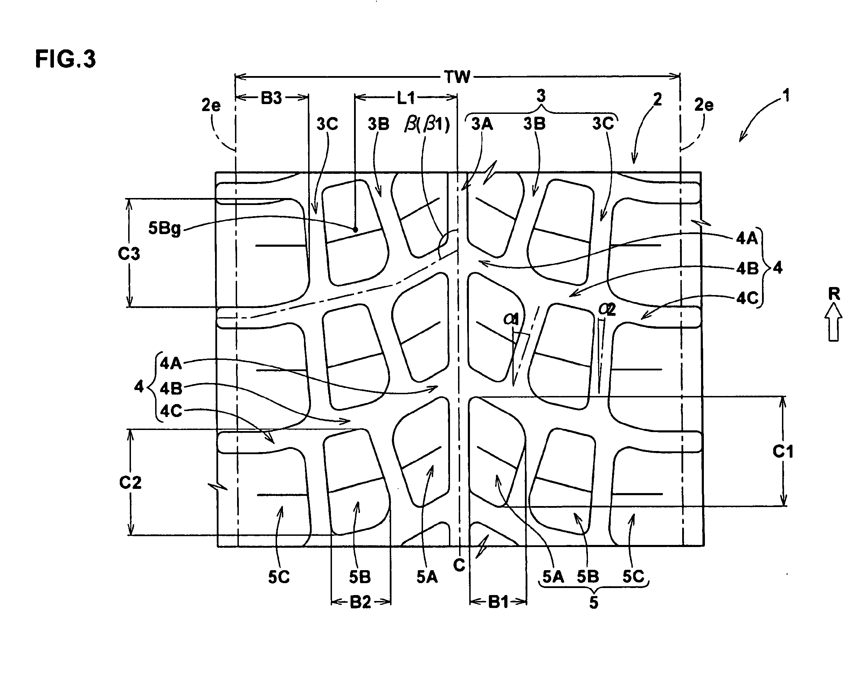

Racing kart tires based on the tread pattern shown in Fig.1 were prepared together with a comparative tire Ref.1 having a tread pattern shown in Fig.3, and tested as follows. All of the tires had the same specifications except for the specifications shown in Table 1.

Common specifications are as follows.
Front tire size: 10x4.50-5 (rim size :4.5 inches)
Rear tire size: 11X7.10-5 (rim size: 8.0 inches)
Tread width TW: 146 mm
Longitudinal grooves
   depth: 5.0 mm
   angle α2: 5 degrees
Transverse grooves
   depth: 5.0 mm
maximum width B1 of center blocks: 20 mm (13.7 % of TW)
maximum width B2 of middle blocks: 23 mm (15.8 % of TW)
maximum width B3 of shoulder blocks: 28 mm (19.2 % of TW)

### < cornering, traction, braking performance test and uneven wear resistance test >

On a wet asphalt road in a circuit course (one lap 734 m), a racing kart with a 100 cc engine provided on the four wheels with test tires (tire pressure: front = rear = 100 kPa) was run seven laps. And the traction force and braking force during straight running and side grip during cornering were evaluated into five ranks by the test driver, wherein the higher rank number is better. Then, the tires were visually checked for abrasion wear and evaluated into five ranks as follows:
1. serious abrasion wear occurred
2. moderate abrasion wear occurred
3. slight abrasion wear occurred
4. sign of abrasion wear was observed
5. no sign of abrasion wear was observed

The test results are shown in Table 1.

### < Drainage (lateral aquaplaning) test >

On a wet asphalt road provided with a 5 mm depth water pool, the racing kart provided with unused test tires as above was run along a 100 meter radius circle, and the lateral acceleration (lateral G) during running in the water pool was measured at the front wheels, gradually increasing the speed entering into the water pool, to obtain the average for the speed range of from 40 to 90 km/h.

The results are indicated in Table 1 by an index based on Ref.1 being 100, wherein the larger is better.

It was confirmed from the test results that racing kart tires according to the present invention can be improved in the traction performance, braking performance and cornering performance.

**Table 1 (1/2)**

| Tire | Ref.1 | Ref.2 | Ref.3 | Ref.4 | Ref.5 | Ex.1 | Ex.2 |
|---|---|---|---|---|---|---|---|
| tread pattern | Fig.3 | Fig.1 | Fig.1 | Fig.1 | Fig.1 | Fig.1 | Fig.1 |
| center longitudinal groove width W1a(mm) | 30 | 30 | 4 | 25 | 8 | 8 | 10 |
| middle longitudinal groove width W1b(mm) | 30 | 30 | 2 | 2 | 6 | 6 | 5 |
| shoulder longitudinal groove width W1c(mm) | 30 | 30 | 2 | 2 | 6 | 6 | 5 |
| maximum groove width W1m (mm) | 30 | 30 | 2 | 2 | 6 | 6 | 5 |
| difference (W1 a-W1 m)(mm) | 0 | 0 | 2 | 23 | 2 | 2 | 5 |
| central transverse groove max width W2a(mm) | 20 | 15 | 15 | 5 | 5 | 5 | 5 |
| middle transverse groove max width W2b(mm) | 20 | 20 | 20 | 8 | 8 | 8 | 8 |
| shoulder transverse groove max width W2c(mm) | 20 | 25 | 25 | 10 | 10 | 10 | 10 |
| ratio (W2a/W2c)(%) | 100 | 60 | 60 | 50 | 50 | 50 | 50 |
| center block ground contact area GT1(sq.mm) | 264 | 132 | 400 | 132 | 395 | 440 | 440 |
| GT1/GT (%) | 33.3 | 20.0 | 20.2 | 29.4 | 30.0 | 34.0 | 34.0 |
| middle block ground contact area GT2(sq.mm) | 264 | 264 | 528 | 132 | 395 | 400 | 400 |
| GT2/GT (%) | 33.3 | 40.0 | 26.6 | 29.4 | 30.0 | 30.9 | 30.9 |
| shoulder block ground contact area GT3(sq.mm) | 264 | 264 | 1056 | 185 | 528 | 455 | 455 |
| GT3/GT (%) | 33.3 | 40.0 | 53.2 | 41.2 | 40.1 | 35.1 | 35.1 |
| gross ground contact area GT(sq.mm) | 792 | 660 | 1984 | 449 | 1318 | 1295 | 1295 |
| number of pattern pitches | 35 | 35 | 10 | 30 | 23 | 23 | 23 |
| transverse groove angle β1(deg.) | 140 | 70 | 130 | 80 | 110 | 100 | 100 |
| tread radius | 100 | 500 | 800 | 1000 | 300 | 300 | 300 |
| middle longitudinal groove angle α1(deg.) | 5 | 3 | 60 | 20 | 5 | 20 | 20 |
| axial distance L1(mm) of centroid of middle block | 20 | 15 | 60 | 30 | 30 | 30 | 30 |
| ratio (L1/TW)(%) | 14 | 10 | 41 | 21 | 21 | 21 | 21 |
| uneven wear resistance | 1 | 1 | 5 | 2 | 4 | 5 | 5 |
| cornering performance | 2 | 2 | 1 | 2 | 4 | 5 | 5 |
| traction performance | 3 | 2 | 1 | 3 | 3 | 5 | 4 |
| braking performance | 3 | 2 | 1 | 3 | 3 | 5 | 4 |
| drainage | 2 | 4 | 4 | 3 | 3 | 5 | 5 |

**Table 1 (2/2)**

| Tire | Ex.3 | Ex.4 | Ex.5 | Ex.6 | Ex.7 | Ex.8 | Ex.9 |
|---|---|---|---|---|---|---|---|
| tread pattern | Fig.1 | Fig.1 | Fig.1 | Fig.1 | Fig.1 | Fig.1 | Fig.1 |
| center longitudinal groove width W1a(mm) | 8 | 8 | 8 | 8 | 8 | 8 | 8 |
| middle longitudinal groove width W1 b(mm) | 6 | 6 | 6 | 6 | 6 | 6 | 6 |
| shoulder longitudinal groove width W1c(mm) | 6 | 6 | 6 | 6 | 6 | 6 | 6 |
| maximum groove width W1 m (mm) | 6 | 6 | 6 | 6 | 6 | 6 | 6 |
| difference (W1a-W1m)(mm) | 2 | 2 | 2 | 2 | 2 | 2 | 2 |
| central transverse groove max width W2a(mm) | 3 | 12 | 5 | 5 | 5 | 5 | 5 |
| middle transverse groove max width W2b(mm) | 8 | 8 | 8 | 8 | 8 | 8 | 8 |
| shoulder transverse groove max width W2c(mm) | 10 | 10 | 10 | 10 | 10 | 10 | 10 |
| ratio (W2a/W2c)(%) | 30 | 120 | 50 | 50 | 50 | 50 | 50 |
| center block ground contact area GT1 (sq.mm) | 440 | 440 | 630 | 440 | 440 | 440 | 440 |
| GT1/GT (%) | 34.0 | 34.0 | 33.7 | 34.0 | 34.0 | 34.0 | 34.0 |
| middle block ground contact area GT2(sq.mm) | 400 | 400 | 520 | 400 | 400 | 400 | 400 |
| GT2/GT (%) | 30.9 | 30.9 | 27.8 | 30.9 | 30.9 | 30.9 | 30.9 |
| shoulder block ground contact area GT3(sq.mm) | 455 | 455 | 720 | 455 | 455 | 455 | 455 |
| GT3/GT (%) | 35.1 | 35.1 | 38.5 | 35.1 | 35.1 | 35.1 | 35.1 |
| gross ground contact area GT(sq.mm) | 1295 | 1295 | 1870 | 1295 | 1295 | 1295 | 1295 |
| number of pattern pitches | 23 | 23 | 23 | 23 | 23 | 23 | 23 |
| transverse groove angle β1(deg.) | 100 | 100 | 100 | 90 | 120 | 100 | 100 |
| tread radius | 300 | 300 | 300 | 300 | 300 | 300 | 300 |
| middle longitudinal groove angle α1(deg.) | 20 | 20 | 20 | 20 | 20 | 5 | 50 |
| axial distance L1(mm) of centroid of middle block | 30 | 30 | 30 | 30 | 30 | 30 | 30 |
| ratio (L1/TW)(%) | 21 | 21 | 21 | 21 | 21 | 21 | 21 |
| uneven wear resistance | 5 | 5 | 5 | 5 | 5 | 4 | 5 |
| cornering performance | 5 | 3 | 4 | 5 | 5 | 5 | 3 |
| traction performance | 5 | 3 | 5 | 5 | 5 | 3 | 4 |
| braking performance | 5 | 3 | 5 | 5 | 5 | 3 | 4 |
| drainage | 2 | 5 | 5 | 2 | 3 | 5 | 5 |

## Claims

1. A racing kart tire (1) having a diameter of not more than 300 mm and comprising
a tread portion (2) having a tread width and provided with a plurality of blocks (5) divided by a plurality of grooves (3, 4) having widths of 3 to 20 mm,
the grooves including a center longitudinal groove (3A)
circumferentially continuously extending on the tire equator (C), and
the blocks on each side of the center longitudinal
groove (3A), including a row of axially inner center blocks (5A), a row of axially outermost shoulder blocks (5C) and a row of middle blocks (5B)
therebetween, wherein
each of the surface areas of the ground contact faces of the middle blocks (5B) is less than the surface areas of the ground contact faces of the center blocks (5A) and less than the surface areas of the ground contact faces of the shoulder blocks (5C).

2. The racing kart tire according to claim 1, wherein
the axial distance (L1) from the tire equator (C), of each of the centroids of the ground contact faces of the middle blocks (5B) is in a range of from 13 to 30 % of the tread width (TW).

3. The racing kart tire according to claim 1 or 2, wherein
the total surface area of the ground contact faces (5Bt) of the middle blocks (5B) is in a range of from 22 to 32 % of the gross surface area of the ground contact faces of all of the blocks.

4. The racing kart tire according to any one of claims 1-3, wherein
the total surface area of the ground contact faces (5Ct) of
the shoulder blocks (5C) is in a range of from 30 to 50 % of the gross surface area of the ground contact faces of all of the blocks.

5. The racing kart tire according to any one of claims 1-4, wherein
the maximum circumferential length (C2) of each of the middle blocks (5B) is in a range of from 50 to 99 % of the maximum circumferential length (L1) of each of the center blocks (5A).

6. The racing kart tire according to any one of claims 1-5, wherein
said grooves include addition longitudinal grooves, and the width of said center longitudinal groove (3A) is larger than those of the addition longitudinal grooves.

7. The racing kart tire according to any one of claims 1-6, wherein
said grooves forms a tread pattern in which a design unit (6) as a minimum repeating unit is repeated circumferentially of the tire 15 to 30 times.

8. The racing kart tire according to any one of claims 1-7, wherein
said grooves (3, 4) form a unidirectional tread pattern having
an intended tire rotational direction (R), and
said grooves include middle longitudinal grooves (3B) disposed between the axially adjacent center blocks (5A) and middle blocks (5B), and
the middle longitudinal grooves (3B) are inclined from the axial outside to the axially inside toward the toe-side from the heel-side in the tire rotational direction (R), at angles in a range of from 5 to 50 degrees with respect to the tire circumferential direction.

9. The racing kart tire according to any one of claims 1-8, wherein
said grooves (3, 4) form a unidirectional tread pattern having an intended tire rotational direction (R), and
said grooves include transverse grooves (4) extending from the center longitudinal groove (3A) to the tread edges while inclining toward the toe-side from the heel-side in the tire rotational direction (R), at angles in a range of from 90 to 120 degrees with respect to the tire circumferential direction.

10. The racing kart tire according to claim 9, wherein
the widths of the transverse grooves (4) are gradually increased toward the tread edges from the tire equator (C).

## Patentansprüche

1. Rennkart-Reifen (1) mit einem Durchmesser von nicht mehr als 300 mm und umfassend
einen Laufflächenabschnitt (2), der eine Laufflächenbreite aufweist und mit einer Mehrzahl von Blöcken (5) versehen ist, die durch eine Mehrzahl von Rillen (3, 4), die Breiten von 3 bis 20 mm aufweisen, unterteilt sind,
wobei die Rillen eine zentrale Längsrille (3A) umfassen, die sich auf dem Reifenäquator (C) durchgehend in der Umfangsrichtung erstreckt, und
die Blöcke auf jeder Seite der zentralen Längsrille (3A) eine Reihe von axial inneren zentralen Blöcken (5A), eine Reihe von axial äußersten Schulterblöcken (5C) und eine Reihe von mittleren Blöcken (5B) dazwischen umfassen, wobei
jeder der Oberflächen-Flächeninhalte der Bodenkontaktflächen der mittleren Blöcke (5B) kleiner als die Oberflächen-Flächeninhalte der Bodenkontaktflächen der zentralen Blöcke (5A) und kleiner als die Oberflächen-Flächeninhalte der Bodenkontaktflächen der Schulterblöcke (5C) ist.

2. Rennkart-Reifen nach Anspruch 1, wobei
der axiale Abstand (L1) von dem Reifenäquator (C) von jedem der Schwerpunkte der Bodenkontaktflächen der mittleren Blöcke (5B) in einem Bereich von 13 bis 30 % der Laufflächenbreite (TW) liegt.

3. Rennkart-Reifen nach Anspruch 1 oder 2,
wobei der Gesamt-Oberflächen-Flächeninhalt der Bodenkontaktflächen (5Bt) der mittleren Blöcke (5B) in einem Bereich von 22 bis 32 % des Brutto-Oberflächen-Flächeninhalts der Bodenkontaktflächen aller Blöcke liegt.

4. Rennkart-Reifen nach einem der Ansprüche 1 bis 3, wobei der Gesamt-Oberflächen-Flächeninhalt der Bodenkontaktflächen (5Ct) der Schulterblöcke (5C) in einem Bereich von 30 bis 50 % des Brutto-Oberflächen-Flächeninhalts der Bodenkontaktflächen aller Blöcke liegt.

5. Rennkart-Reifen nach einem der Ansprüche 1 bis 4, wobei die maximale Umfangslänge (C2) von jedem der mittleren Blöcke (5B) in einem Bereich von 50 bis 99 % der maximalen Umfangslänge (C1) von jedem der mittleren Blöcke (5A) liegt.

6. Rennkart-Reifen nach einem der Ansprüche 1 bis 5, wobei die Rillen zusätzliche Längsrillen umfassen, und
die Breite der zentralen Längsrille (3A) größer als jene der zusätzlichen Längsrillen ist.

7. Rennkart-Reifen nach einem der Ansprüche 1 bis 6, wobei
die Rillen ein Laufflächenprofil bilden, in welchem eine Konstruktionseinheit (6) als eine minimale Wiederholungseinheit in Umfangsrichtung des Reifens 15- bis 30-mal wiederholt ist.

8. Rennkart-Reifen nach einem der Ansprüche 1 bis 7, wobei
die Rillen (3, 4) ein unidirektionales Laufflächenprofil mit einer vorgesehenen Reifendrehrichtung (R) bilden, und
die Rillen mittlere Längsrillen (3B) umfassen, die zwischen den axial benachbarten zentralen Blöcken (5A) und mittleren Blöcken (5B) angeordnet sind, und
die mittleren Längsrillen (3B) von der axialen Außenseite zu der axialen Innenseite zu der Zehenseite hin von der Fersenseite aus in der Reifendrehrichtung (R) unter Winkeln in einem Bereich von 5 bis 50 Grad mit Bezug auf die Reifenumfangsrichtung geneigt sind.

9. Rennkart-Reifen nach einem der Ansprüche 1 bis 8, wobei
die Rillen (3, 4) ein unidirektionales Laufflächenprofil mit einer vorgesehenen Reifendrehrichtung (R) bilden, und
die Rillen Querrillen (4) umfassen, die sich von der zentralen Längsrille (3A) zu den Laufflächenkanten erstrecken, während sie sich zu der Zehenseite hin von der Fersenseite aus in der Reifendrehrichtung (R) unter Winkeln in einem Bereich von 90 bis 120 Grad mit Bezug auf die Reifenumfangsrichtung neigen.

10. Rennkart-Reifen nach Anspruch 9, wobei
die Breiten der Querrillen (4) im Allgemeinen zu den Laufflächenkanten hin von dem Reifenäquator (C) aus zunehmen.

## Revendications

1. Pneumatique pour kart de compétition (1) ayant un diamètre qui ne dépasse pas 300 mm et comprenant
une portion formant bande de roulement (2) ayant une largeur de roulement et dotée d'une pluralité de blocs (5) divisés par une pluralité de rainures (3, 4) ayant des largeurs de 3 à 20 mm,
les rainures incluant une rainure longitudinale centrale (3A) s'étendant circonférentiellement en continu sur l'équateur du pneumatique (C), et les blocs sur chaque côté de la rainure longitudinale centrale (3A) incluant une rangée de blocs centraux axialement intérieurs (5A), une rangée de blocs d'épaulement axialement extérieurs (5C), et une rangée de blocs médians (5B) entre celles-ci, dans lequel
chacune des aires de surface des faces de contact au sol des blocs médians (5B) est inférieure aux aires de surface des faces de contact au sol des blocs centraux (5A), et inférieure aux aires de surface des faces de contact au sol des blocs d'épaulement (5C).

2. Pneumatique pour kart de compétition selon la revendication 1, dans lequel
la distance axiale (21) depuis l'équateur du pneumatique (C), de chacun des centres de gravité des faces de contact au sol des blocs médians (5B), est dans une plage de 13 à 30 % de la largeur de roulement (TW).

3. Pneumatique pour kart de compétition selon la revendication 1 ou 2, dans lequel
l'aire de surface totale des faces de contact au sol (5Bt) des blocs médians (5B) est dans une plage de 22 à 32 % de l'aire de surface globale des faces de contact au sol de tous les blocs.

4. Pneumatique pour kart de compétition selon l'une quelconque des revendications 1 à 3, dans lequel
l'aire de surface totale des faces de contact au sol (5Ct) les blocs d'épaulement (5C) est dans une plage de 30 à 50 % de l'aire de surface globale des faces de contact au sol de tous les blocs.

5. Pneumatique pour kart de compétition selon l'une quelconque des revendications 1 à 4, dans lequel
la longueur circonférentielle maximum (C2) de chacun des blocs médians (5B) est dans une plage de 50 à 99 % de la longueur circonférentielle maximum (Ca) de chacun des blocs centraux (5A).

6. Pneumatique pour kart de compétition selon l'une quelconque des revendications 1 à 5, dans lequel
lesdites rainures incluent des rainures longitudinales additionnelles, et la largeur de ladite rainure longitudinale centrale (3A) est plus grande que celle des rainures longitudinales additionnelles.

7. Pneumatique pour kart de compétition selon l'une quelconque des revendications 1 à 6, dans lequel
lesdites rainures forment un motif de roulement dans lequel une unité de conception (6) se répète, à titre d'unité répétitive minimum, 15 à 30 fois sur la circonférence du pneumatique.

8. Pneumatique pour kart de compétition selon l'une quelconque des revendications 1 à 7, dans lequel
lesdites rainures (3, 4) forment un motif de roulement unidirectionnel ayant une direction de rotation voulue pour le pneumatique (R), et lesdites rainures incluent des rainures longitudinales médianes (3B) disposées entre les blocs centraux axialement adjacents (5A) et des blocs médians (5B), et
les rainures longitudinales médianes (3B) sont inclinées depuis l'extérieur vers l'intérieur en sens axial en direction du côté pied depuis le côté talon dans la direction de rotation du pneumatique (R), sous les angles dans une plage de 5 à 50° par rapport à la direction circonférentielle du pneumatique.

9. Pneumatique pour kart de compétition selon l'une quelconque des revendications 1 à 8, dans lequel
lesdites rainures (3, 4) forment un motif de roulement unidirectionnel ayant une direction de rotation voulue pour le pneumatique (R), et lesdites rainures incluent des rainures transversales (4) s'étendant depuis la rainure longitudinale centrale (3A) vers les bords de roulement tout en s'inclinant vers le côté pied depuis le côté talon dans la direction de rotation (R) du pneumatique, sous des angles dans une plage de 90 à 120° par rapport à la direction circonférentielle du pneumatique.

10. Pneumatique pour kart de compétition selon la revendication 9, dans lequel
les largeurs des rainures transversales (4) augmentent progressivement vers les bordures de roulement depuis l'équateur du pneumatique (C).
